# EUROPEAN PATENT SPECIFICATION

(11) **EP 0 506 275 B1**
(45) Date of publication and mention of the grant of the patent: **20.09.1995**
(21) Application number: 92302244.6
(22) Date of filing: 16.03.1992
(51) Int. Cl.: G21C 19/375, G21F 5/012

(54) **Fuel rod consolidation structure**
Brennstabdichtsetzvorrichtung
Structure de consolidation des barreaux de combustible

(30) Priority: 25.03.1991 US 674014
(43) Date of publication of application: 30.09.1992
(73) Proprietor: B&W FUEL COMPANY, Lynchburg, Virginia (US)
(72) Inventor: Smentek, Thomas Joseph, Forest, Virginia 24551 (US)
(74) Representative: Purvis, William Michael Cameron

(56) References cited:
- EP-A- 0 005 623
- FR-A- 2 543 350
- US-A- 3 466 445

## Description

The invention relates generally to the storage of spent nuclear fuel and particularly to a fuel rod consolidation structure.

In commercial nuclear power plants, nuclear fuel assemblies are replaced at routine intervals as they are depleted in various locations to maintain the most efficient power level and power shaping within the core of the reactor. Due to limited or nonexistent fuel reprocessing facilities, each power plant must store these radioactive spent fuel rods on site until fuel reprocessing becomes available or the radioactivity has decayed to safe levels. Storage in water is necessary for radiation attenuation and removal of decay heat. The limited underwater storage space at commercial nuclear plants results in the need for the most efficient use of available space due to the number of fuel assemblies used during the projected life of the reactor. Efficient use of the space is achieved by removing the fuel rods from grid assemblies and repacking the fuel rods with a minimum of spacing therebetween. This allows fuel rods from two fuel assemblies to be stored in a canister that only occupies the space that one fuel assembly would normally occupy. This consolidation ratio of 2 to 1 is achieved by packing the spent fuel rods closely together in a triangular pitch array. Patented approaches to this problem which the applicant is aware of include the following.

Patent specifications US-A-4,619,808 and US-A-4,659,535 each disclose the use of a tapered transfer canister that receives the rods in a loosely packed rectangular array and rearranges the rods into a relatively tightly packed rectangular array at the lower end of the canister. The rods are then transferred to a storage container from the consolidation canister.

Patent specifications US-A-4,659,536 and US-A-4,683,110 disclose the use of flutes, springs, and a moving installation sheet for tightly packing rods in a triangular pitch array.

Patent specification US-A-4,636,351 discloses the use of a dense-packing device having clamping means for compressing the introduced fuel rods into a hexagonal array.

Patent specification US-A-4,441,242 discloses a consolidation system having a row ordering section for rearranging the configuration of the fuel rods, a horizontal consolidation section for horizontally compacting several rows of fuel rods, and a vertical consolidation section for vertically compacting several rows of horizontally compacted fuel rods.

Patent specification 4,723,359 discloses a horizontal consolidation system that pivots a spent fuel assembly into a horizontal position and then pulls the fuel rods out into a horizontal position at a second station where they are reconfigured in the original square pitch formation into a more compact array.

Patent specification EP-A-0 005 623 discloses a storage container for spent nuclear fuel rods having steps that support the fuel rods in a triangular array with the assistance of a movable guidance plate.

As can be seen from the above approaches, removing fuel rods in the square array in a fuel assembly and repacking them into a triangular pitch array is complicated by the fact that, when performed in a vertical orientation, gravity provides little or no benefit to packing the rods in a triangular pitch array. Performing these operations in a horizontal orientation is not always practical due to limited space in spent fuel pools. When loading a storage or transfer canister in the vertical orientation, the fuel rods must be guided and held in position to ensure that they are held in the proper packing array until the canister is fully loaded. Difficulties in maintaining the close pack array also arise when there is a need to remove leaking fuel rods from a canister or there are insufficient rods fully to load a canister. The approaches referred to above present large mechanical systems which are maintenance intensive due to the need to operate underwater and become increasingly more difficult to maintain the longer they are used due to contamination buildup.

Patent Specification FR-A-2 543 350 discloses two spaced apart plates to extend transversely in an elongate framework to receive nuclear fuel elements for storage, each plate arrangement being formed by strips of material bent so as to form cells, each strip having its width extending in the longitudinal direction of the framework but having an insignificant dimension in that direction.

Patent Specification US-A-3 466 445 discloses grooved plastics trays which can be stacked to form open ended passageways to receive fuel elements for storage.

According to the invention there is provided a fuel rod consolidation structure comprising a grid structure having a plurality of hexagonally shaped individual cells formed from metal strips and sized to receive nuclear fuel rods;
characterised in that a storage canister is provided with the grid structure attached to and extending along a portion of the interior of the storage canister; and
the grid structure extends approximately one half the length of the storage canister or approximately the full length of the canister.

Preferably the individual cells are positioned in a triangular pitch array.

Such a fuel rod consolidation structure can occupy a minimum of space, maintain rods in a triangular pitch array when only partially loaded or when a fuel rod is removed, and require little or no maintenance.

Thus the invention can provide a consolidation canister into which spent fuel rods can be directly loaded with existing equipment without the need for a transfer container for initial packing of the fuel rods. The grid provides positive guidance of a fuel rod over the length of the consolidation canister to maintain triangular pitch loading. There are no moving parts to wear, fail, and maintain. The grid provides sufficient support to the relatively flexible fuel rods so that the canister can be partially loaded and handled or several fuel rods removed from the canister without the need for additional braces to prevent the close pack array from being disrupted.

The invention is diagrammatically illustrated by way of example in the accompanying drawings, in which:
Figure 1 is a side sectional view illustrating one embodiment of a fuel rod consolidating structure according to the invention in a spent fuel pool;
Figure 2 is a view taken on line A-A of Figure 1 illustrating the consolidating grid structure before fuel rods have been loaded therein;
Figure 3 is a view taken on line A-A of Figure 1 illustrating the consolidating grid structure with fuel rods therein; and
Figure 4 is a side sectional view of an alternate embodiment of a fuel rod consolidating structure according to the invention.

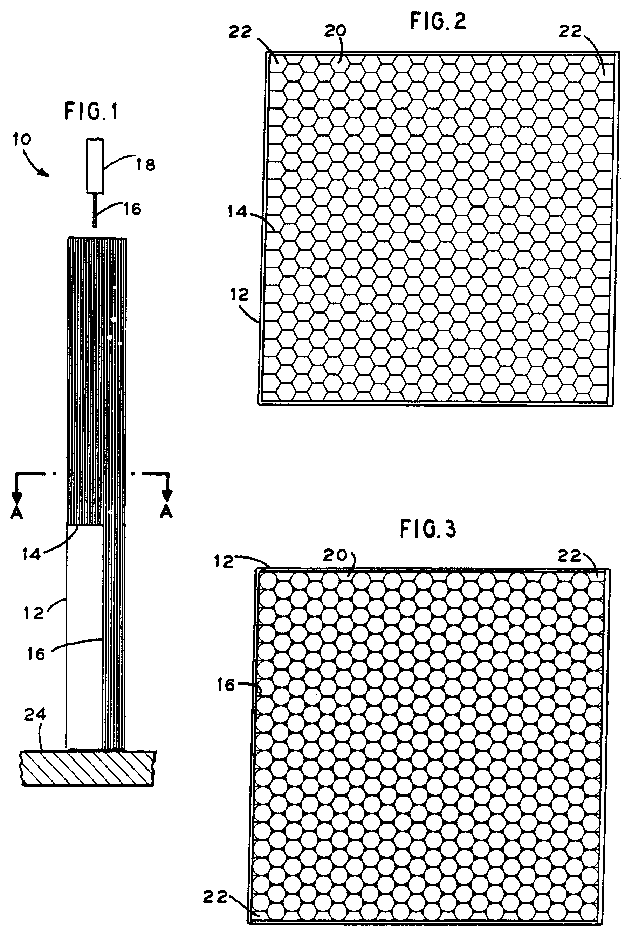

Referring to the drawings, and firstly to Figure 1, a fuel rod consolidation structure 10 generally comprises a storage canister 12 and a grid structure 14.

The storage canister 12 is similar to standard storage containers for fuel rods in that a bottom forming a closed end has four side walls attached thereto at right angles to provide a substantially rectangular cross section. Fuel rods 16 can be loaded into the storage canister 12 through the open end using a fuel rod puller 18.

The grid structure 14 is positioned so as to extend approximately through one half the length of the canister 12 and may be attached to the inside of the walls so as to be integral therewith. In the preferred embodiment, the grid structure 14 is positioned to extend downwardly along the interior of the canister 12 from its top end. This is of a sufficient length to provide positive guidance for the fuel rods 16 as they are lowered into the canister 12. As can be seen in Figures 2 and 3, the grid structure 14 is provided with a plurality of individual cells 20 arranged in a triangular pitch array for the most efficient use of space for fuel rod storage inside the canister 12. Except for two rows of cells 22, one row along each of two opposing side walls of the canister 12, the cells 20 are of a hexagonal shape. The interconnecting strips that form the grid 14 may be relatively thin since they are only required to support the fuel rods 16 radially to maintain the triangular pitch array when the canister 12 is not fully loaded. A thickness of approximately 0.18 mm (0.007 inches) is sufficient for this purpose. This provides the grid structure 14 with no moving parts that holds the fuel rods 16 in place and that occupies a minimum of space in the storage canister 12. The grid structure 14 may be formed from any material compatible with conditions in nuclear reactor spent fuel pools such as aluminium, stainless steel or other non-corrosive material. Fabrication may be from stamped strips welded together. Attachment of a metal grid to the canister 12 can be by any suitable means such as welding or using locking tabs.

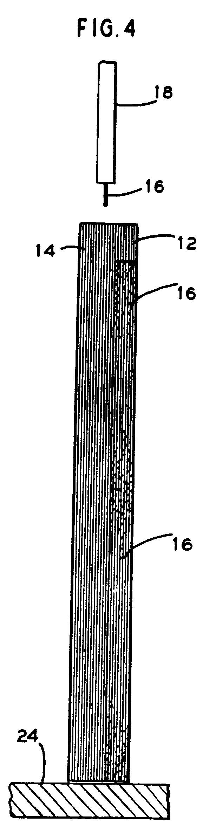

Figure 4 illustrates an alternate embodiment in which, a single grid structure 14 having a plurality of individual cells identical to that in Figure 1 is shown extending the entire interior length of the canister 12. This provides the same support to the fuel rods 16 and can also eliminate the need for attaching the grid structure 14 to the canister 12 since it is supported on the bottom of the canister 12.

In operation, the storage canister 12 is first placed on the bottom 24 of a spent fuel pool at the site. The fuel rod puller 18 is then used to remove fuel rods 16 from a fuel assembly not shown and to load them into the storage canister 12. The grid structure 14 positions and holds the fuel rods in the individual cells 20 in a triangular pitch array and provides a consolidation ratio of nearly two to one. The grid structure 14 is of a sufficient length as to provide positive radial support to the fuel rods to maintain the triangular pitch array if the canister 12 is not fully loaded or some of the fuel rods 16 are removed. After loading is completed the canister 12 is covered in the normal way.

## Claims

1. A fuel rod consolidation structure comprising a grid structure (14) having a plurality of hexagonally shaped individual cells (20) formed from metal strips and sized to receive nuclear fuel rods (16);
characterised in that a storage canister (12) is provided with the grid structure (14) attached to and extending along a portion of the interior of the storage canister (12); and
the grid structure (14) extends approximately one half the length of the storage canister (12) or approximately the full length of the canister (12).

2. A fuel rod consolidation structure according to claim 1, wherein the individual cells (20) are positioned in a triangular pitch array.

## Patentansprüche

1. Brennstabzusammenlegungsvorrichtung mit einer Trägerrostvorrichtung (14) mit mehreren sechseckig geformten Einzelzellen (20), die von Metallstreifen gebildet werden und so bemessen sind, daß sie Kernbrennstoffstäbe (16) aufnehmen, **dadurch gekennzeichnet**, daß ein Lagerkanister (12) vorgesehen ist, wobei die Trägerrostvorrichtung (14) an einem Teil des Inneren des Lagerkanisters (12) befestigt ist und sich entlang diesem Teil erstreckt und sich die Trägerrostvorrichtung (14) etwa über eine Hälfte der Länge des Lagerkanisters (12) oder etwa über die volle Länge des Kanisters (12) erstreckt.

2. Brennstabzusammenlegungsvorrichtung nach Anspruch 1, bei der die Einzelzellen (20) in einer Dreieckneigungsanordnung positioniert sind.

## Revendications

1. Structure de consolidation de barres de combustible comprenant une structure de grille (14) comportant une pluralité d'alvéoles individuels de forme hexagonale (20) formés à partir de bandes de métal et dimensionnés pour recevoir des barres de combustible nucléaire (16);
caractérisée en ce qu'un boîtier de stockage (12) est prévu avec la structure de grille (14) fixée à lui et s'étendant le long d'une portion de l'intérieur du boîtier de stockage (12); et
la structure de grille (14) s'étend à peu près sur la moitié de la longueur du boîtier de stockage (12) ou à peu près sur toute la longueur du boîtier (12).

2. Structure de consolidation de barres de combustible selon la revendication 1, dans laquelle les alvéoles individuels (20) sont positionnés en une configuration triangulaire.
